# EUROPÄISCHE PATENTSCHRIFT

(11) **EP 3 182 063 B1**
(45) Veröffentlichungstag und Bekanntmachung des Hinweises auf die Patenterteilung: **26.02.2020**
(21) Anmeldenummer: 16202666.0
(22) Anmeldetag: 07.12.2016
(51) Int. Cl.: G01B 21/12, B61K 9/12, G01P 3/00

(54) **VERFAHREN ZUM ERMITTELN EINES AKTUELLEN RADDURCHMESSERS**
METHOD FOR DETERMINING A CURRENT WHEEL DIAMETER
PROCÉDÉ DE DÉTERMINATION D'UN DIAMÈTRE DE ROUE RÉEL

(30) Priorität: 17.12.2015 DE 102015225702
(43) Veröffentlichungstag der Anmeldung: 21.06.2017
(73) Patentinhaber: Thales Management & Services Deutschland GmbH, 71254 Ditzingen (DE)
(72) Erfinder: KRIEGER, Martin, 70619 Stuttgart (DE)
(74) Vertreter: Kohler Schmid Möbus Patentanwälte

(56) Entgegenhaltungen:
- DE-A1- 3 148 401
- US-B2- 8 874 345

## Beschreibung

### Hintergrund der Erfindung

Die Erfindung betrifft ein Verfahren zum Ermitteln eines aktuellen Raddurchmessers eines Rades eines Fahrzeugs, insbesondere eines Schienenfahrzeugs, umfassend die Schritte:
a) Hinterlegen eines Ausgangswerts des Raddurchmessers,
b) Messen eines Drehgeschwindigkeitsparameters des Rades für einen Messzeitpunkt tᵢ (i = 1 ... n),
c) Bestimmen einer von dem Drehgeschwindigkeitsparameter unabhängigen Referenzgeschwindigkeit zum Messzeitpunkt tᵢ,
d) Ermitteln eines Schätzwerts eines Raddurchmesserparameters für den Messzeitpunkt tᵢ ausgehend von der in Schritt c) bestimmten Referenzgeschwindigkeit und dem in Schritt b) gemessenen Wert des Drehgeschwindigkeitsparameters des Rades,
e) Wiederholen der Schritte b) bis d) für verschiedene Messzeitpunkte tᵢ,
f) Bestimmen eines Korrekturwerts des Raddurchmessers für einen Auswertezeitpunkt aus den ermittelten Schätzwerten.

Ein derartiges Verfahren ist aus der US 8,874,345 B2 bekannt geworden. Bei dem dortigen Verfahren wird der Zahlenwert des Ausgangswerts durch den Zahlenwert des Korrekturwerts auf Basis einer Differenz der Geschwindigkeiten ersetzt.

Weg- und Fahrgeschwindigkeitsmessungen werden oftmals in Abhängigkeit von der Anzahl der Radumdrehungen des betreffenden Fahrzeugs ermittelt. Insbesondere bei Zugsicherungssystemen ist es dazu erforderlich, den Raddurchmesser auf bis zu 3 mm genau zu kennen.

Die Bestimmung einer Fahrgeschwindigkeit eines Fahrzeugs mittels eines Drehzahlsensors setzt die Kenntnis eines Abrollumfangs eines auf einer Fahrbahn abrollenden Rades, dessen Drehzahl von dem Drehzahlsensor gemessen wird, voraus. Gleiches gilt entsprechend für die Messung einer zurückgelegten Fahrstrecke anhand einer Zählung der durchgeführten Umdrehungen des Rades. Der Abrollumfang des Rades wird üblicherweise aus einem Raddurchmesser berechnet. Der Raddurchmesser kann vor der Montage des Rades an das Fahrzeug mit verhältnismäßig geringem Aufwand gemessen werden, sofern er nicht bereits aus der Fertigung des Rades bekannt ist.

Jedoch nutzen sich die Räder eines Fahrzeugs, etwa eines Schienenfahrzeugs, die auf einer Fahrbahn, etwa einer Schiene, abrollen, beim Betrieb des Fahrzeugs ab. Zur genauen Messung der Fahrgeschwindigkeit und Fahrstrecke mittels Drehsensoren ist es daher notwendig, den aktuellen Raddurchmesser des Rades zu kennen. So kann sich etwa der Raddurchmesser eines Schienenfahrzeugs im Betrieb durchaus um 12 % gegenüber einem Ausgangswert verringern. Es ist dann eine genaue Bestimmung der Fahrgeschwindigkeit und Fahrstrecke aus die Raddrehung betreffenden Informationen, insbesondere mit einer im Bahnverkehr zulässigen Abweichung des Messwerts vom wahren Wert von maximal 0,3 % (bei einem Raddurchmesser von beispielsweise 1000 mm entsprechend plus-minus 3 mm), nicht mehr möglich.

Daher muss der aktuelle Raddurchmesser während der Betriebsdauer des Fahrzeugs regelmäßig bestimmt werden. Bei Schienenfahrzeugen wird dazu typischerweise mit einem relativ großen Aufwand im Rahmen von Wartungsmaßnahmen manuell nachgemessen. Auch besteht beim manuellen Nachmessen die Gefahr der Falschmessung oder Falscheingabe des Messwerts.

Alternativ dazu ist es bekannt, Kalibierfahrten auf ausgewählten Referenzstrecken mit genau vermessenen Referenzpunkten durchzuführen. Auch dieses Vorgehen erfordert einen sehr großen Aufwand im Hinblick auf die Einrichtung der Referenzstrecken und die regelmäßige Durchführung der Kalibrierfahrten. Darüber hinaus steht das Fahrzeug während der Kalibrierfahrten typischerweise nicht für seinen eigentlichen Zweck zur Verfügung.

Bei dem aus der US 8,874,345 B2 bekannten Verfahren zur automatischen Korrektur der hinterlegten Größe eines Rades wird wiederholt eine Abweichung zwischen einer anhand eines Drehgeschwindigkeitsparameters eines Rades und der hinterlegten Größe des Rades bestimmten Geschwindigkeit eines Fahrzeugs und einer davon unabhängigen Referenzgeschwindigkeit des Fahrzeugs bestimmt und daraus ein Schätzwert für die Größe des Rades berechnet. Davon ausgehend wird der hinterlegte Wert für die Größe des Rades korrigiert. Allerdings besteht dabei die Gefahr, dass Fehler bei der Bestimmung der von dem Drehgeschwindigkeitsparameter unabhängigen Referenzgeschwindigkeit nicht erkannt werden, so dass schließlich ein fehlerhafter Korrekturwert für die Größe des Rades bestimmt wird. Dies kann insbesondere problematisch sein, wenn die Fahrgeschwindigkeit und Fahrstrecke des Fahrzeugs im Rahmen eines Zugsicherungssystems ausgewertet werden. Besonders gefährlich ist dies, wenn beispielsweise ein zu kleiner Raddurchmesser bestimmt wird, da dann die aus der Raddrehung bestimmten Werte für Fahrgeschwindigkeit und Fahrstrecke kleiner sind als die tatsächlichen Werte.

### Aufgabe der Erfindung

Es ist daher Aufgabe der Erfindung, ein Verfahren anzugeben, das es erlaubt, einen aktuellen Raddurchmesser eines Rades eines Fahrzeugs zuverlässig, präzise und sicher im laufenden Betrieb des Fahrzeugs zu ermitteln.

### Beschreibung der Erfindung

Diese Aufgabe wird erfindungsgemäß gelöst durch ein Verfahren gemäß Patentanspruch 1.

Die Erfindung sieht vor, dass ein Erwartungswert des Raddurchmessers für den Auswertezeitpunkt ausgehend von dem Ausgangswert des Raddurchmessers und einem Wert eines ersten Laufleistungsparameters des Fahrzeugs ermittelt wird, und dass der Korrekturwert mit dem Ausgangswert des Raddurchmessers verglichen wird und der Zahlenwert des Ausgangswerts durch den Zahlenwert des Korrekturwerts nur ersetzt wird, sofern der Korrekturwert wenigstens um eine Mindestabweichung kleiner ist als der Ausgangswert, und sofern die betragsmäßige Differenz von Korrekturwert und Erwartungswert unter einem Plausibilitätsgrenzwert liegt.

Das Ersetzen des Zahlenwerts des Ausgangswerts durch den Zahlenwert des Korrekturwerts wird nachfolgend auch als Schritt g) bezeichnet.

Indem ausgehend von dem Wert des ersten Laufleistungsparameters ein Erwartungswert des Raddurchmessers bestimmt wird, wird das Durchführen einer Plausibilitätskontrolle für den Korrekturwert ermöglicht. Der Erwartungswert beschreibt, wie groß der Durchmesser des Rades der Erfahrung nach bei dem aktuellen Wert des ersten Laufleistungsparameters sein müsste. Der Erwartungswert kann beispielsweise berechnet werden, indem von dem Ausgangswert ein zu dem Wert des ersten Laufleistungsparameters proportionaler Verschleißbetrag abgezogen wird. Erfindungsgemäß können dadurch bekannte Informationen (etwa aus Versuchen oder der Erfahrung) über das Verschleißverhalten des Rades in Abhängigkeit von dem ersten Laufleistungsparameter in das Verfahren eingebracht werden.

Der erste Laufleistungsparameter kann insbesondere Informationen enthalten betreffend eine Betriebsdauer des Fahrzeugs, eine vom Fahrzeug zurückgelegte Fahrstrecke, eine Summeninformation über einen Verlauf der Fahrzeuglängsbeschleunigung, bevorzugt gewichtet mit der Gesamtmasse des Fahrzeugs oder eines das Fahrzeug enthaltenden Zuges und/oder eine Summeninformation über einen Verlauf einer vom Fahrzeug auf an das Fahrzeug angekoppelte Wagen wirkenden Kraft. Der Wert des ersten Laufleistungsparameters wird beim Ermitteln des Erwartungswerts typischerweise entsprechend dem für das Bestimmen des Korrekturwerts in Schritt f) angesetzten Auswertezeitpunkt tₐ gewählt.

Durch den Vergleich der betragsmäßigen Differenz von Korrekturwert und Erwartungswert mit dem Plausibilitätsgrenzwert kann sichergestellt werden, dass allfällig auftretende Messfehler in Schritt b) und/oder in Schritt c) und/oder Rechenfehler (etwa aufgrund fehlerhafter Programmierung oder Elektronikdefekten) in Schritt d) und/oder in Schritt f) nicht dazu führen, dass in Schritt g) ein grob falscher Zahlenwert des Korrekturwerts für den Raddurchmesser angesetzt wird. Der Plausibilitätsgrenzwert für die betragsmäßige Differenz von Korrekturwert und Erwartungswert kann absolut (z.B. 0,3 mm) oder relativ (z.B. 0,03 %) zu Korrekturwert oder Erwartungswert definiert sein.

Indem die Mindestabweichung zwischen Korrekturwert und Ausgangswert vorgegeben wird, kann erreicht werden, dass der Zahlenwert des Ausgangswerts nur dann durch den Zahlenwert des Korrekturwerts ersetzt wird, wenn sich der Raddurchmesser signifikant verringert hat. Es wird dadurch vermieden, dass bereits kleinste Veränderungen des Raddurchmessers zu einer häufigen Anpassung des Zahlenwerts des Ausgangswerts führen. Solch übermäßig häufige Anpassungen könnten unter Umständen mit der Zeit (d.h. bei vielmaliger Anwendung des erfindungsgemäßen Verfahrens) zu Folgefehlern und dadurch zu erheblichen Abweichungen des aktuellen Zahlenwerts des Ausgangswerts von dem wahren Wert des aktuellen Raddurchmessers führen. Diese Gefahr kann erfindungsgemäß durch die Vorgabe der Mindestabweichung vermieden werden. Die Mindestabweichung kann absolut (z.B. 0,5 mm) oder relativ (z.B. 0,05 %) zu dem Ausgangswert definiert sein.

Der Drehgeschwindigkeitsparameter ist typischerweise eine Drehgeschwindigkeit, insbesondere gemessen als Drehzahl (Anzahl der Umdrehungen um eine Radachse pro Zeiteinheit), des Rades. Die Drehzahl des Rades wird bevorzugt direkt an dem Rad oder an einer drehfest mit dem Rad verbundenen Achse gemessen. Alternativ kann der Drehgeschwindigkeitsparameter auch eine Drehgeschwindigkeit einer Welle sein, deren Drehgeschwindigkeit in einem bekannten, insbesondere festen, Verhältnis zu der Drehgeschwindigkeit des Rades steht. In Frage kommen beispielsweise eine Drehgeschwindigkeit einer Getriebewelle eines Getriebes oder eine Drehgeschwindigkeit einer Motorwelle eines auf das Rad wirkenden Antriebsmotors.

Die von dem Drehgeschwindigkeitsparameter unabhängige Referenzgeschwindigkeit kann aus einer Zeitdauer, die zum Durchfahren einer Messtrecke mit einer bekannten Länge benötigt wird, berechnet werden. Die Messtrecke kann mit einer vorbekannten Länge eingerichtet sein. Alternativ kann die Länge der Messstrecke mit einem Positionsbestimmungssystem, etwa GPS, bestimmt werden. Bevorzugt wird die Referenzgeschwindigkeit mit einer Genauigkeit gemessen, die besser ist als eine durch den Plausibilitätsgrenzwert definierte Genauigkeit für das Aktualisieren des Raddurchmessers.

Der Raddurchmesserparameter steht in einem bekannten Verhältnis zu dem Raddurchmesser. Bevorzugt ist der Raddurchmesserparameter der Raddurchmesser selbst. Alternativ können beispielsweise ein Radius des Rades oder ein Abrollumfang des Rades betrachtet werden. Beim Ermitteln des Schätzwertes für den Raddurchmesserparameter in Schritt d) kann insbesondere ein Quotient aus der Referenzgeschwindigkeit und dem Drehgeschwindigkeitsparameter berechnet werden. Typischerweise wird in Schritt d) von einem undeformierten, insbesondere kreisrunden, schlupffrei abrollenden Rad ausgegangen.

Durch Wiederholen der Schritte b) bis d) wird eine Schar von Schätzwerten des Raddurchmesserparameters für verschiedene Messzeitpunkte tᵢ erhalten. Diese Schar von Schätzwerten beinhaltet insbesondere auch eine Information über den Verlauf der Schätzwerte mit dem Fortschreiten der Zeit, die sich in der Zuordnung eines Schätzwerts zu dem jeweiligen Messzeitpunkt tᵢ ausdrückt. Diese Information kann beim Bestimmen des Korrekturwerts des Raddurchmessers wie nachfolgend beschrieben berücksichtigt werden. Im einfachsten Fall kann der Korrekturwert als der zuletzt bestimmte Schätzwert gewählt werden. Alternativ ist es denkbar, den Korrekturwert als einen Mittelwert der Schätzwerte zu berechnen, wobei bevorzugt später ermittelte Schätzwerte stärker gewichtet werden können. Besonders vorteilhafte Varianten der Berechnung des Korrekturwerts werden im Folgenden noch dargestellt.

Wenn die oben beschriebenen erfindungsgemäßen Voraussetzungen vorliegen, wird der Zahlenwert des Ausgangswerts durch den Zahlenwert des Korrekturwerts ersetzt. Das erfindungsgemäße Verfahren wird dann bevorzugt erneut durchgeführt. Durch das Ersetzen des Ausgangswerts durch den Korrekturwert in Schritt g) wird ein neuer Ausgangswert gemäß Schritt a) für den folgenden Verfahrensdurchlauf hinterlegt.

### Bevorzugte Varianten des erfindungsgemäßen Verfahrens

Bei einer vorteilhaften Variante ist vorgesehen, dass den in Schritt d) ermittelten Schätzwerten jeweils ein Wert des ersten Laufleistungsparameters zugeordnet wird, und dass in Schritt f) der Korrekturwert des Raddurchmessers durch eine Ausgleichsrechnung aus den Schätzwerten und den zugeordneten Werten des ersten Laufleistungsparameters bestimmt wird. Durch das Zuordnen eines Wertes des ersten Laufleistungsparameters zu den jeweiligen Schätzwerten kann eine Entwicklung des Raddurchmessers über einer Verschleiß auslösenden Beanspruchung, die durch den ersten Laufleistungsparameter ausgedrückt wird, besser abgebildet werden, als durch Zuordnung des jeweiligen Messzeitpunkts tᵢ. Die Ausgleichsrechnung kann umfassen, eine Ausgleichsgerade nach der Methode der kleinsten Fehlerquadrate zu bestimmen und diese für einen Wert des ersten Laufleistungsparameters auszuwerten. Insbesondere kann der Wert des ersten Laufleistungsparameters zu dem Zeitpunkt der Durchführung von Schritt f) bei der Auswertung der Ausgleichsrechnung verwendet werden. Dies entspricht einer Extrapolation über den letzten Messzeitpunkt tₙ hinaus. Dadurch kann der Korrekturwert besonders genau bestimmt werden, wenn seit dem letzten Messzeitpunkt tₙ der Wert des ersten Laufleistungsparameters signifikant angestiegen ist. Alternativ kann der Wert des ersten Laufleistungsparameters zu dem letzten Messzeitpunkt tₙ, zu dem die Schritte b) und c) durchgeführt wurden, zur Auswertung der Ausgleichsrechnung verwendet werden. Dies entspricht einer Bestimmung des Korrekturwerts für diesen letzten Messzeitpunkt tₙ; d.h. es gilt tₐ=tₙ. Dies bietet sich insbesondere an, wenn Schritt f) unmittelbar nach dem letzten Messzeitpunkt tₙ durchgeführt wird.

Bevorzugt ist auch eine Variante, bei der vorgesehen ist, dass den in Schritt d) ermittelten Schätzwerten jeweils ein Wert von mindestens zwei Laufleistungsparametern zugeordnet wird, dass in Schritt f) zunächst für jeden Laufleistungsparameter ein Korrekturzwischenwert des Raddurchmessers durch eine Ausgleichsrechnung aus den Schätzwerten und den zugeordneten Werten des jeweiligen Laufleistungsparameters bestimmt wird, und dass der Korrekturwert aus den Korrekturzwischenwerten bestimmt wird, bevorzugt wobei der größte Korrekturzwischenwert als der Korrekturwert verwendet wird. Jedem Schätzwert werden somit ein Wert eines ersten Laufleistungsparameters und ein Wert eines zweiten Laufleistungsparameters zugeordnet. Bevorzugt wird jedem Schätzwert weiterhin ein Wert eines dritten Laufleistungsparameters zugeordnet. Als Laufleistungsparameter können insbesondere verwendet werden: eine Betriebsdauer des Fahrzeugs, eine Fahrstrecke des Fahrzeugs, ein zeitliches Integral über den Betrag der Längsbeschleunigung des Fahrzeugs, bevorzugt wobei die Längsbeschleunigung mit der Masse eines das Fahrzeug umfassenden Zuges gewichtet wird. Durch das Verwenden mehrerer Laufleistungsparameter kann berücksichtigt und ausgeglichen werden, dass sich die Abhängigkeit einer Abnutzung des Rades von dem jeweiligen Laufleistungsparameter bei unterschiedlichen Betriebsbedingungen verändern kann. Die Laufleistungsparameter werden bevorzugt ab dem Zeitpunkt des Hinterlegens des Ausgangswerts des Raddurchmessers in Schritt a) gemessen. Durch die Verwendung des größten Korrekturzwischenwertes wird bezweckt, dass der wahre Wert des Raddurchmessers nicht größer ist als der verwendete größte Korrekturzwischenwert, so dass im folgenden Betrieb des Fahrzeugs ein Tachometer keine geringere Fahrgeschwindigkeit oder Fahrstrecke anzeigt, als es der Realität entspricht. Alternativ kann der Korrekturwert etwa als ein Mittelwert aus den Korrekturzwischenwerten berechnet werden.

Bevorzugt ist auch eine Variante, bei der für jede in Schritt c) bestimmte Referenzgeschwindigkeit eine Plausibilitätskontrolle hinsichtlich des Ausgangswertes des Raddurchmessers und des jeweiligen Werts des Drehgeschwindigkeitsparameters des Rades durchgeführt wird. Es wird dabei überprüft, ob eine (betragsmäßige) Abweichung zwischen der Referenzgeschwindigkeit und einer mit dem Ausgangswert des Raddurchmessers und dem gemessenen Wert des Drehgeschwindigkeitsparameters berechneten Tachometergeschwindigkeit des Fahrzeugs einen Referenzgrenzwert nicht überschreitet. Sofern der Referenzgrenzwert überschritten wird, werden die Schritte b) und c) wiederholt. Dadurch können Messungen der Referenzgeschwindigkeit verworfen werden, die anscheinend mit großen Fehlern behaftet sind.

Besonders bevorzugt ist eine Variante, bei der Schritt b) durchgeführt wird, während sich das Fahrzeug in einer vordefinierten Fahrsituation befindet. Typischerweise wird auch Schritt c) durchgeführt, während sich das Fahrzeug in der vordefinierten Fahrsituation befindet. Bevorzugt werden die Schritte b) und c) gleichzeitig durchgeführt. Die vordefinierte Fahrsituation kann beispielsweise umfassen, insbesondere auch in Kombination miteinander: das Fahrzeug wird nicht angetrieben oder gebremst, die Fahrbahn verläuft näherungsweise horizontal (z.B. Steigung/Gefälle kleiner 1 %), geringe Längsbeschleunigung des Fahrzeugs (z.B. kleiner 0,2 m/s²), Geschwindigkeit in einem bestimmten Bereich (z.B. zwischen 30 und 50 km/h) und/oder einen Fahrbahnzustand (etwa Trockenheit, Geradheit). Dadurch kann erreicht werden, dass nur ein geringer Schlupf des Rades auftritt (z.B. weniger als 0,5 % Abweichung zwischen einer translatorischen Längsgeschwindigkeit eines Mittelpunkts des Rades gemessen gegenüber einer Fahrbahn und einer Umfangsgeschwindigkeit eines Punktes am Abrollumfang des Rades gemessen gegenüber der Drehachse des Rades am Fahrzeug). Bevorzugt kann der Schlupf auch direkt gemessen und bei der vordefinierten Fahrsituation berücksichtigt werden. Ein geringer Schlupf während der Messung verbessert die Genauigkeit des Verfahrens. Alternativ kann Schritt b) durchgeführt werden, während der Schlupf des Rades näherungsweise (z.B. mit maximal 10 % Abweichung) einem im Betrieb des Fahrzeugs typischerweise auftretenden Durchschnittsschlupf entspricht. Beim Bestimmen einer Tachometergeschwindigkeit (aus dem hinterlegten Wert des Raddurchmessers und dem Wert des Drehgeschwindigkeitsparameters im Fahrbetrieb) des Fahrzeugs wird dann der Durchschnittsschlupf kompensiert.

Besonders bevorzugt ist eine Weiterentwicklung dieser Variante, bei der jedes Mal, wenn sich das Fahrzeug in der vordefinierten Fahrsituation befindet, Schritt b) durchgeführt wird. Es können dann viele Messwerte des Drehgeschwindigkeitsparameters bei guten Messbedingungen gesammelt werden. Dies verbessert die Genauigkeit des Verfahrens.

Vorteilhaft ist auch eine Weiterentwicklung, bei der die vordefinierte Fahrsituation herbeigeführt wird, um Schritt b) durchzuführen. Wenn die vordefinierte Fahrsituation nicht oft genug von selbst eintritt, kann sie herbeigeführt werden, um ausreichend viele Messwerte bei guten Messbedingungen aufzeichnen zu können.

Besonders bevorzugt ist eine Weiterentwicklung, bei der die vordefinierte Fahrsituation umfasst, dass sich das Fahrzeug in einem traktionslosen Zustand befindet. Traktionslos bedeutet insbesondere, dass das Fahrzeug nicht angetrieben und nicht gebremst wird. Es tritt dann praktisch kein Schlupf zwischen dem Rad und der Fahrbahn auf. Dies vermeidet aus einem allfälligen Schlupf resultierende systematische Fehler bei der Anwendung des Verfahrens. Der Raddurchmesser kann somit besonders genau ermittelt werden.

Bei einer vorteilhaften Weiterentwicklung ist vorgesehen, dass in einem Fahrtenplan für das Fahrzeug vorbestimmt ist, wann und/oder wo die Fahrsituation herbeigeführt wird. Bei der Erstellung des Fahrtenplans können besonders geeignete Streckenabschnitte berücksichtigt werden. Auch kann dadurch sichergestellt werden, dass die Fahrsituation eintritt, so dass der Schritt b) unter guten Bedingungen durchgeführt werden kann.

Besonders bevorzugt ist eine Variante, bei der die Referenzgeschwindigkeit unabhängig von Ortsdaten des Fahrzeugs bestimmt wird. Dies erlaubt es, zu dem jeweiligen Messzeitpunkt tᵢ eine kurze Einzelmessung der Referenzgeschwindigkeit und des Drehgeschwindigkeitsparameters durchzuführen. Die Messbedingungen müssen dann nur für einen kurzen Zeitraum geeignet sein. Demgegenüber müssen bei einem Verfahren zur Bestimmung der Referenzgeschwindigkeit aus Ortsdaten des Fahrzeugs und der verstrichenen Zeit beim Durchfahren einer dazwischenliegenden Fahrstrecke optimale Messbedingungen über längere Distanzen und Zeiträume herrschen. Insbesondere kann eine Messdauer für die Bestimmung der Referenzgeschwindigkeit in Schritt c) höchstens 0,5 s, bevorzugt höchstens 0,3 s betragen. Bevorzugt ist auch, dass das Fahrzeug während der Bestimmung der Referenzgeschwindigkeit in Schritt c) höchstens 50 m, bevorzugt höchstens 30 m, zurücklegt. Bei derart kurzen Messzeiten bzw. Messstrecken würden mit einer ortsbasierten Bestimmung der Referenzgeschwindigkeit zu große Fehler auftreten.

Vorteilhaft ist eine Variante, die vorsieht, dass bei der Bestimmung der Referenzgeschwindigkeit in Schritt c) ein Laufzeitunterschied zweier Messsignale berücksichtigt wird, bevorzugt wobei die Messsignale von dem Fahrzeug ausgesandt werden. Die Bestimmung der Referenzgeschwindigkeit kann dabei beispielsweise auf einfache Weise mit einem Lasersystem durchgeführt werden, das gepulste Lichtsignale aussendet. Entsprechend können auch gepulste Schallsignale, insbesondere Ultraschall, eingesetzt werden.

Besonders bevorzugt ist eine Variante, die vorsieht, dass bei der Bestimmung der Referenzgeschwindigkeit in Schritt c) der Dopplereffekt ausgenutzt wird. Zur Bestimmung der Referenzgeschwindigkeit kann beispielsweise ein Radarsystem eingesetzt werden. Insbesondere kann auf besonders einfache und genaue Weise die Referenzgeschwindigkeit eines Schienenfahrzeugs mittels eines in ein Gleisbett strahlenden Radarsensors gemessen werden.

Ganz besonders bevorzugt ist eine Weiterentwicklung dieser Variante, bei der vorgesehen ist, dass die Referenzgeschwindigkeit mittels eines an dem Fahrzeug angeordneten GPS-Empfängers bestimmt wird, und dass von dem GPS-Empfänger Qualitätsinformationen über die Güte der Referenzgeschwindigkeit bereitgestellt werden. Auf diese Weise kann die Referenzgeschwindigkeit besonders präzise und mit verschwindend geringem zusätzlichem Geräteaufwand bestimmt werden. Ein GPS-Empfänger ist typischerweise ohnehin an dem Fahrzeug angeordnet. Dieser wird erfindungsgemäß nicht nur zur Positionsbestimmung benutzt, sondern es wird auch der Dopplereffekt relativ zu Satelliten eines GPS-Systems zur Bestimmung der Referenzgeschwindigkeit ausgenutzt. Die Qualitätsinformationen können insbesondere umfassen: Anzahl der Satelliten wenigstens 12° über dem Horizont, Horizontal Dilution of Precision (HDOP). Die Qualitätsinformationen können herangezogen werden, um zu entscheiden, ob die zuvor erfassten Messwerte von Drehgeschwindigkeitsparameter und Referenzgeschwindigkeit verworfen werden oder berücksichtigt werden sollen. Dies verbessert die Zuverlässigkeit und Genauigkeit des Verfahrens.

Vorteilhaft ist auch eine Variante bei der vorgesehen ist, dass für den jeweiligen Messzeitpunkt tᵢ eine Kontrollgeschwindigkeit bestimmt wird, bevorzugt wobei die Kontrollgeschwindigkeit mit einer von dem Fahrzeug zurückgelegten Fahrstrecke und der dazu benötigten Zeit bestimmt wird, und dass Schritt d) nur durchgeführt wird, wenn eine Abweichung, bevorzugt eine betragsmäßige Abweichung, der Referenzgeschwindigkeit von der Kontrollgeschwindigkeit einen Kontrollgrenzwert nicht überschreitet. Bei Überschreiten des Kontrollgrenzwerts werden für diesen Zeitpunkt der in Schritt b) bestimmte Wert des Drehgeschwindigkeitsparameters und die in Schritt c) bestimmte Referenzgeschwindigkeit verworfen und das Verfahren wird mit Schritt b) fortgesetzt. Es können somit Fehler bei der Bestimmung der Referenzgeschwindigkeit zuverlässig erkannt und Fehlmessungen ausgesondert werden, so dass die Genauigkeit und Zuverlässigkeit des Verfahrens erhöht werden.

Bevorzugt ist eine Variante, die dadurch gekennzeichnet ist, dass für jeden in Schritt d) ermittelten Schätzwert eine Plausibilitätskontrolle hinsichtlich des Ausgangswerts des Raddurchmessers und/oder der zu vorherigen Messzeitpunkten tᵢ bestimmten Schätzwerte durchgeführt wird. Insbesondere kann jeder Schätzwert mit einem oder mehreren zuvor ermittelten Schätzwerten verglichen werden. Dabei kann auch berücksichtigt werden, dass der Raddurchmesser beim Betrieb des Fahrzeugs immer kleiner wird, so dass auch die Schätzwerte immer kleiner werden müssen, zumindest gegenüber Schätzwerten, die hinreichend weit in der Vergangenheit ermittelt wurden. Bei der Plausibilitätsprüfung kann der erste Laufleistungsparameter berücksichtigt werden, etwa indem abgeschätzt wird, wie sich der aktuelle Schätzwert von einem in der Vergangenheit liegenden Schätzwert angesichts der Differenz der jeweils zugeordneten Werte des ersten Laufleistungsparameters unterscheiden müsste. Dadurch können fehlerhaft bestimmte Schätzwerte erkannt und verworfen werden, so dass sie sich nicht nachteilig auf die Güte des Korrekturwerts auswirken. Fehlerhafte Schätzwerte können insbesondere aus Messfehlern bei den vorhergehenden Messungen in den Schritten b) und c) resultieren oder durch eine fehlerhafte Verarbeitung der Messergebnisse entstehen.

Besonders bevorzugt ist eine Variante, bei der vorgesehen ist, dass für jeden in Schritt d) ermittelten Schätzwert ausgehend von dem Ausgangswert des Raddurchmessers und dem Wert des ersten Laufleistungsparameters des Fahrzeugs zum Messzeitpunkt tᵢ ein Zwischenerwartungswert des Raddurchmesserparameters ermittelt wird, und dass der Schätzwert mit dem Zwischenerwartungswert des Raddurchmesserparameters verglichen wird und der Schätzwert verworfen wird, sofern die betragsmäßige Differenz von Schätzwert und Zwischenerwartungswert über einem Schätzgrenzwert liegt. Erkenntnisse über die Verringerung des Raddurchmessers mit dem Anwachsen des ersten Laufleistungsparameters können dadurch nutzbar gemacht werden, um fehlerhaft ermittelte Schätzwerte zu erkennen. Diese können sodann verworfen werden, so dass sie sich nicht nachteilig auf die Güte des Korrekturwerts auswirken.

Eine weitere Variante des erfindungsgemäßen Verfahrens sieht vor, dass ein Montagewert für den Raddurchmesser hinterlegt ist und dass für den Fall dass der Korrekturwert wenigstens um eine Mindestabweichung größer ist als der Ausgangswert und die betragsmäßige Differenz von Korrekturwert und Montagewert unter einem Montagegrenzwert liegt, der Zahlenwerts des Ausgangswerts durch den Maximalwert ersetzt wird oder ein Hinweissignal erzeugt wird. Bei einem sprunghaften Anstieg des Erwartungswerts des Raddurchmessers, der in der Nähe des Montagewertes liegt, wird davon ausgegangen, dass vergessen wurde, den Anfangswert nach Montage zurückzustellen. Gemäß der erfindungsgemäßen Variante wird der Anfangswert dann entweder automatisch auf den Montagewert gesetzt oder es wird ein Signal z.B. an den Fahrer ausgegeben, damit ein manuelles Zurücksetzen veranlasst wird. Der Raddurchmesser kann dann über das zuvor beschriebene Verfahren auf gegebenenfalls real kleinere Durchmesser adaptiert werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt.
- Fig. 1a: zeigt ein schematisches Ablaufdiagramm einer ersten Variante eines erfindungsgemäßen Verfahrens zur Ermittlung eines aktuellen Raddurchmessers aus mehreren Messungen eines Drehgeschwindigkeitsparameters eines Rades und einer davon unabhängigen Referenzgeschwindigkeit.
- Fig. 1b: zeigt einen Ausschnitt aus einem schematischen Ablaufplan einer ersten Weiterentwicklung der Verfahrensvariante von Fig. 1a mit Berücksichtigung mehrerer, verschiedener Laufleistungsparameter.
- Fig. 1c: zeigt einen Ausschnitt aus einem schematischen Ablaufplan einer zweiten Weiterentwicklung der Verfahrensvariante von Fig. 1a mit Berücksichtigung einer Kontrollgeschwindigkeit.
- Fig. 1d: zeigt den in Fig. 1a gestrichpunktet dargestellten optionalen Ausschnitt einer speziellen Variante des erfindungsgemäßen Verfahrens, mit dem sprunghafte Anstiege des Raddurchmessers berücksichtigt werden.
- Fig. 2a: zeigt ein schematisches Diagramm von gemessenen Werten für einen Drehgeschwindigkeitsparameter aufgetragen über der Zeit der Messung.
- Fig. 2b: zeigt ein schematisches Diagramm von zugehörigen Messwerten einer Referenzgeschwindigkeit aufgetragen über der Zeit der Messung.
- Fig. 2c: zeigt schematisch die Entwicklung eines ersten Laufleistungsparameters über der Zeit.
- Fig. 2d: zeigt ein Diagramm von Schätzwerten für den Raddurchmesser aufgetragen über dem ersten Laufleistungsparameter und eine zugehörige Ausgleichsgerade.

Die **Fig. 3** zeigt einen schematischen Ablaufplan einer zweiten Variante eines erfindungsgemäßen Verfahrens.

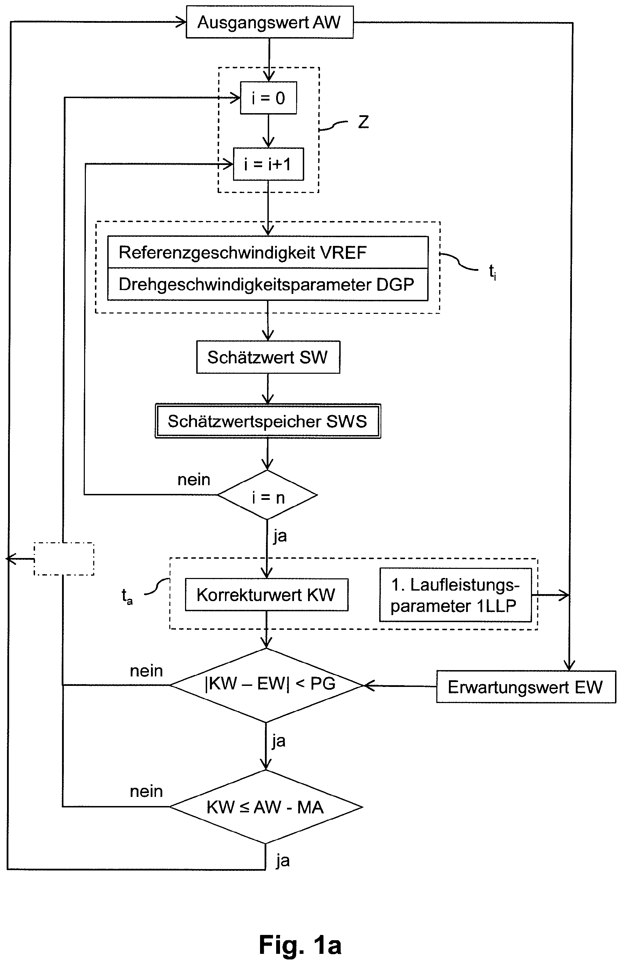

Die **Fig. 1a** zeigt ein schematisches Ablaufdiagramm einer ersten Variante eines erfindungsgemäßen Verfahrens zur Ermittlung eines aktuellen Raddurchmessers aus mehreren Messungen eines Drehgeschwindigkeitsparameters eines Rades und einer davon unabhängigen Referenzgeschwindigkeit. Zunächst wird ein Ausgangswert **AW** für den Raddurchmesser eines Rades eines Fahrzeugs hinterlegt, etwa in einem elektronischen Speicherelement eines Bordcomputers des Fahrzeugs. Sodann wird ein Zähler **Z** für Messsequenzen initialisiert (auf null gesetzt) und anschließend inkrementiert (um eins erhöht). Anschließend werden in einer Messsequenz für einen Messzeitpunkt **tᵢ** die Werte eines Drehgeschwindigkeitsparameters **DGP** für das Rad und einer von dem Drehgeschwindigkeitsparameter unabhängigen Referenzgeschwindigkeit **VREF** ermittelt. Aus den Werten des Drehgeschwindigkeitsparameters DGP und der Referenzgeschwindigkeit VREF wird sodann ein Schätzwert **SW** für den Raddurchmesser berechnet. Der Schätzwert SW wird in einem Schätzwertspeicher **SWS** abgelegt.

Daraufhin wird überprüft, ob bereits eine vorgegebene Anzahl n von Messzyklen erfolgreich durchgeführt wurde, d.h. ob bereits n plausible Schätzwerte SW bestimmt wurden. Falls nein, wird der Zähler Z für die Messsequenzen um eins erhöht und eine neue Messsequenz durchgeführt. Wenn n Schätzwerte SW vorliegen, wird für einen Auswertezeitpunkt **tₐ** ein Korrekturwert **KW** für den Raddurchmesser bestimmt. Für den Auswertezeitpunkt tₐ wird auch der Wert eines ersten Laufleistungsparameters **1LLP** gemessen. Der erste Laufleistungsparameter 1LLP kann die Fahrstrecke des Fahrzeugs seit der Ermittlung des Ausgangswerts AW sein.

Anschließend wird überprüft, ob der Korrekturwert KW plausibel ist. Dazu wird anhand des gemessenen Wertes des ersten Laufleistungsparameters 1LLP ein Erwartungswert **EW** für den Raddurchmesser berechnet. Der Erwartungswert EW spiegelt eine erfahrungsgemäße Abnahme des Raddurchmessers gegenüber dem Ausgangswert AW mit dem Fortschreiten des ersten Laufleistungsparameters 1LLP wieder. Typischerweise sinkt der Erwartungswert EW linear mit dem Wert des ersten Laufleistungsparameters 1LLP (gemessen ab dem Zeitpunkt der Hinterlegung des Ausgangswerts AW) von dem Ausgangswert AW ab. Es kann jedoch auch eine nichtlineare Abhängigkeit angesetzt werden. Bei dieser Plausibilitätsprüfung wird, überprüft, ob die betragsmäßige Differenz von Korrekturwert KW und Erwartungswert EW unter einem Plausibilitätsgrenzwert **PG** liegt. D.h. es wird überprüft, ob der Korrekturwert KW in etwa um so viel kleiner ist als der Ausgangswert AW, wie es der Erfahrung nach bei dem vorliegenden Wert des ersten Laufleistungsparameters der Fall sein müsste.

Falls der Korrekturwert KW plausibel ist, wird weiterhin überprüft, ob der Korrekturwert mindestens um eine Mindestabweichung **MA** kleiner ist als der Ausgangswert AW. Falls dies nicht der Fall ist, oder falls der Korrekturwert nicht plausibel ist, wird der Zähler Z neu initialisiert und der beschriebene Verfahrensablauf findet erneut statt. Falls auch die Mindestabweichung MA eingehalten wird, wird der Zahlenwert des Ausgangswerts AW durch den Zahlenwert des Korrekturwerts KW ersetzt. Sodann kann ein erneuter Verfahrensdurchlauf erfolgen.

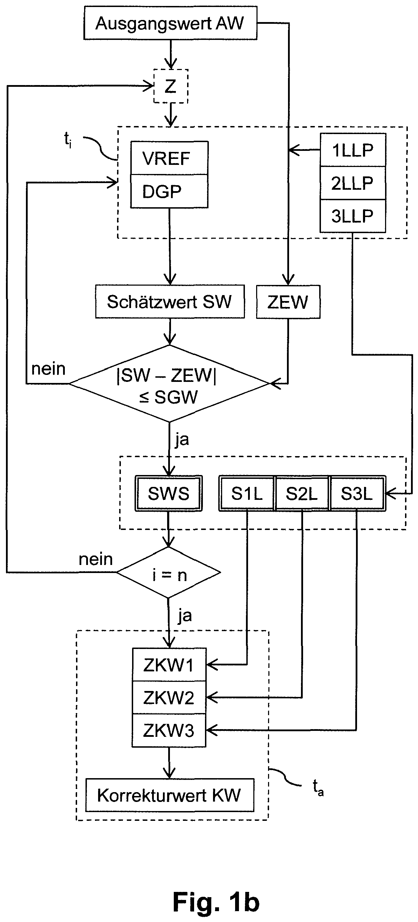

Die **Fig. 1b** zeigt einen Ausschnitt aus einem schematischen Ablaufplan einer ersten Weiterentwicklung der Verfahrensvariante von Fig. 1a mit einer zusätzlichen Plausibilitätskontrolle auf Basis des ersten Laufleistungsparameters 1LLP. Ein zweiter Laufleistungsparameter **2LLP** und ein dritter Laufleistungsparameter **3LLP** werden neben dem ersten Laufleistungsparameter 1LLP zur Berechnung von Korrekturzwischenwerten **ZKW1**, **ZKW2**, **ZKW3** herangezogen.

Für jeden Messzeitpunkt tᵢ werden hier neben der Referenzgeschwindigkeit VREF und dem Drehgeschwindigkeitsparameter DGP auch die Werte des ersten Laufleistungsparameters 1LLP, des zweiten Laufleistungsparameters 2LLP und des dritten Laufleistungsparameters 3LLP gemessen. Der zweite Laufleistungsparameter 2LLP kann die Betriebsdauer des Fahrzeugs sein. Der dritte Laufleistungsparameter 3LLP kann das zeitliche Integral über die Längsbeschleunigung des Fahrzeugs gewichtet mit der Gesamtmasse eines das Fahrzeug enthaltenden Zuges sein.

Der Wert des ersten Laufleistungsparameters 1LLP wird nun herangezogen, um zu überprüfen, ob der Schätzwert SW gegenüber dem Ausgangswert AW plausibel ist, d.h. ob der Schätzwert SW ungefähr um einen aus dem Wert des ersten Laufleistungsparameters 1LLP bestimmten Betrag kleiner ist als der Ausgangswert AW. Dazu wird mit dem gemessenen Wert des ersten Laufleistungsparameters 1LLP und dem Ausgangswert AW ein Zwischenerwartungswert **ZEW** bestimmt. Es wird sodann die betragsmäßige Differenz von Schätzwert SW und Zwischenerwartungswert ZEW mit einem Schätzgrenzwert **SGW** verglichen. Falls die betragsmäßige Differenz nicht größer ist als der Schätzgrenzwert SGW, gilt der Schätzwert SW als plausibel; anderenfalls nicht. Ebenso können auch mit dem zweiten Laufleistungsparameter 2LLP und dem dritten Laufleistungsparameter 3LLP in entsprechender Weise weitere Zwischenerwartungswerte (nicht dargestellt) berechnet werden. Es kann dann gefordert werden, dass der Schätzwert SW gegen wenigstens einen, wenigstens zwei oder alle drei Zwischenerwartungswerte plausibel ist, wobei jeweils der Schätzgrenzwert SGW oder individuell verschiedene erste bis dritte Schätzgrenzwerte (nicht dargestellt) betrachtet werden können.

Falls der Schätzwert SW nicht plausibel ist, wird eine erneute Messung des Drehgeschwindigkeitsparameters DGP, der Referenzgeschwindigkeit VREF , des ersten Laufleistungsparameters 1LLP, des zweiten Laufleistungsparameters 2LLP und des dritten Laufleistungsparameters 3LLP durchgeführt. Falls der Schätzwert SW plausibel ist, werden der Schätzwert SW in einem Schätzwertspeicher **SWS** und die Werte der Laufleistungsparameter 1LLP, 2LLP, 3LLP in je einem zugehörigen Speicher **S1L** für den ersten Laufleistungsparameter 1LLP, einem zugehörigen Speicher **S2L** für den zweiten Laufleistungsparameter 2LLP und einem zugehörigen Speicher **S3L** für den dritten Laufleistungsparameter 3LLP abgelegt. Es versteht sich, dass alle Speicher SWS, S1L, S2L, S3L oder einige der Speicher auf einem gemeinsamen Datenträger eingerichtet sein können. Die die Speicher können auch in einer gemeinsamen Datenbankstruktur, einem gemeinsamen Array, einer gemeinsamen Datenmatrix oder dergleichen eingerichtet sein.

Wenn die Anzahl der gespeicherten Schätzwerte SW und der zugehörigen Werte der Laufleistungsparameter 1LLP, 2LLP, 3 LLP jeweils n beträgt, wird für den Auswertezeitpunkt tₐ der Korrekturwert KW bestimmt. Der Korrekturwert KW wird hier nicht direkt bestimmt, sondern es wird für jeden Laufleistungsparameter 1LLP, 2LLP, 3LLP zunähst der jeweilige Korrekturzwischenwert ZKW1, ZKW2, ZKW3 bestimmt. Es wird dazu jeweils eine Ausgleichsrechnung durchgeführt, die einen Verlauf der Schätzwerte SW über den zugeordneten Werten der verschiedenen Laufleistungsparameter 1LLP, 2LLP, 3LLP abbildet. Typischerweise wird für jeden Laufleistungsparameter 1LLP, 2LLP, 3LLP eine Ausgleichskurve, insbesondere eine Ausgleichsgerade, für die Schätzwerte SW berechnet. Jede dieser Ausgleichskurven kann sodann für den Auswertezeitpunkt tₐ ausgewertet werden, um die jeweiligen Korrekturzwischenwerte ZKW1, ZKW2 und ZKW3 zu erhalten.

Aus den Korrekturzwischenwerten ZKW1, ZKW2 und ZKW3 wird dann der Korrekturwert KW bestimmt. Als der Korrekturwert KW kann etwa der größte der Korrekturzwischenwerte ZKW1, ZKW2 und ZKW3 gewählt werden; KW = max(ZKW1, ZKW2, ZKW3). Alternativ kann der Korrekturwert KW als ein Mittelwert der Korrekturzwischenwerte ZKW1, ZKW2, ZKW3 berechnet werden, z.B. KW = (ZKW1 + ZKW2 + ZKW3) / 3 oder KW = sqrt [(ZKW1^2 + ZKW2^2 + ZKW3^2) /3]. Sodann kann das Verfahren wie bei der Fig. 1a beschrieben fortgesetzt werden.

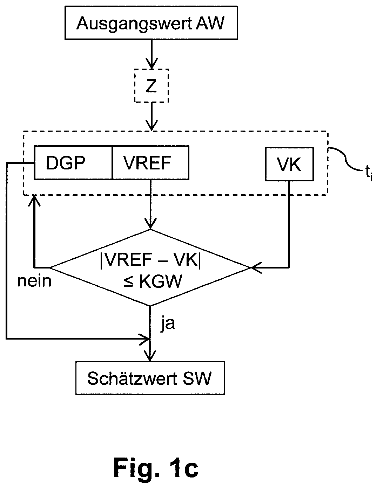

Die **Fig. 1c** zeigt einen Ausschnitt aus einem schematischen Ablaufplan einer zweiten Weiterentwicklung der Verfahrensvariante von Fig. 1a mit Berücksichtigung einer Kontrollgeschwindigkeit **VK**. Für jeden Messzeitpunkt tᵢ wird hier zusätzlich zu der Referenzgeschwindigkeit VREF und dem Drehgeschwindigkeitsparameter DGP auch die Kontrollgeschwindigkeit VK gemessen. Typischerweise wird die Kontrollgeschwindigkeit VK aus der Zeitdauer berechnet, die das Fahrzeug zum Durchfahren einer Strecke einer bekannten Länge benötigt. Jedenfalls erfolgt die Messung der Kontrollgeschwindigkeit VK unabhängig von der Messung der Referenzgeschwindigkeit VREF und der Messung des Drehgeschwindigkeitsparameters DGP.

Bevor aus der Referenzgeschwindigkeit VREF und dem Drehgeschwindigkeitsparameters DGP ein Schätzwert SW berechnet wird, wird hier überprüft, ob die Referenzgeschwindigkeit VREF gegenüber der Kontrollgeschwindigkeit VK plausibel ist. Dazu wird die betragsmäßige Differenz der Referenzgeschwindigkeit VREF und der Kontrollgeschwindigkeit VK mit einem Kontrollgrenzwert **KGW** verglichen. Wenn die betragsmäßige Differenz nicht größer ist als der Kontrollgrenzwert KGW gilt die Referenzgeschwindigkeit als plausibel, andernfalls nicht.

Wenn die Referenzgeschwindigkeit VREF plausibel ist, wird der Schätzwert SW berechnet. Andernfalls wird die Messung der Referenzgeschwindigkeit VREF des Drehgeschwindigkeitsparameters DGP und der Kontrollgeschwindigkeit VK wiederholt. Wenn der Schätzwert SW bestimmt wurde, kann das erfindungsgemäße Verfahren wie bei Fig. 1a beschrieben fortgesetzt werden. Es versteht sich, dass diese Plausibilitätsprüfung auch bei der weiterentwickelten Verfahrensvariante von Fig. 1b zusätzlich eingesetzt werden kann.

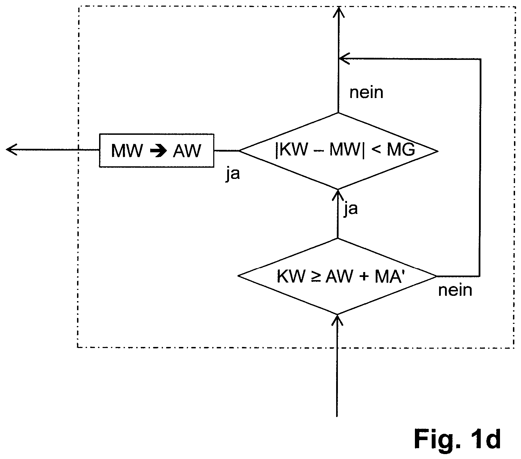

In **Fig. 1d** ist ein zusätzlicher Verfahrensabschnitt gezeigt, der in Fig. 1a gestrichpunktet dargestellt ist. Hier wird überprüft, ob der Korrekturwert KW mindestens um eine Mindestabweichung **MA'** größer ist als der Ausgangswert AW, also ob ein sprunghafter Anstieg des Raddurchmessers vorliegt. Darüber hinaus wird überprüft, ob die betragsmäßige Differenz von Korrekturwert KW und einem Montagewert **MW** (Wert des Raddurchmessers bei Montage) unter einem Montagegrenzwert **MG** liegt. D.h. es wird überprüft, ob der Korrekturwert KW in etwa dem Montagewert MW entspricht. Wenn beides der Fall ist, wird davon ausgegangen, dass die Räder ausgetauscht wurden, ohne den Anfangswert zurückzusetzen. Der Anfangswert AW wird dann durch den Montagewert MW ersetzt. Eine Adaption des Raddurchmessers kann wie oben beschrieben erfolgen.

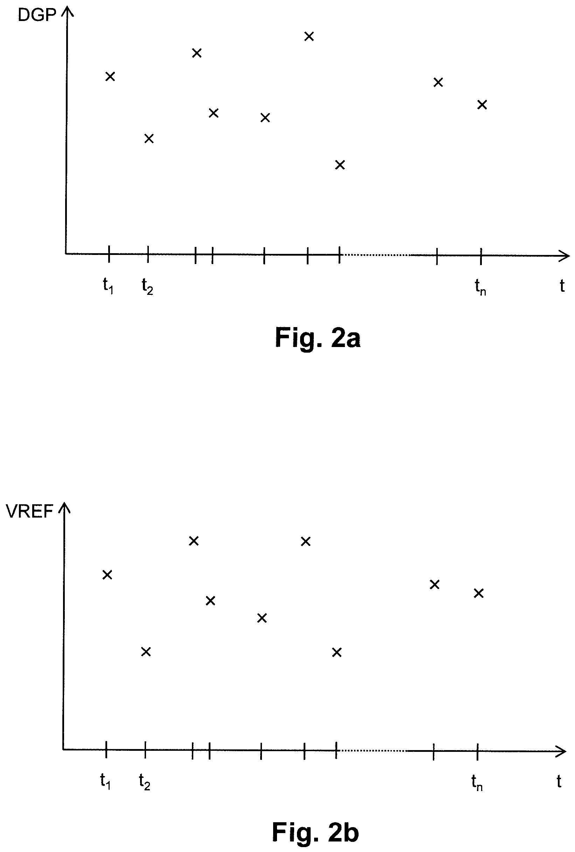

Die **Fign. 2a bis 2d** veranschaulichen die Ermittlung eines Korrekturwerts KW aus Messwerten für einen Drehgeschwindigkeitsparameter DGP und für eine Referenzgeschwindigkeit VREF. In der **Fig. 2a** sind schematisch Messwerte des Drehgeschwindigkeitsparameters DGP für verschiedene Messzeitpunkte tᵢ, i=1...n, über der Zeit **t** aufgetragen. Das Diagramm der **Fig. 2b** zeigt schematisch die zugehörigen Werte der Referenzgeschwindigkeit VREF über der Zeit t.

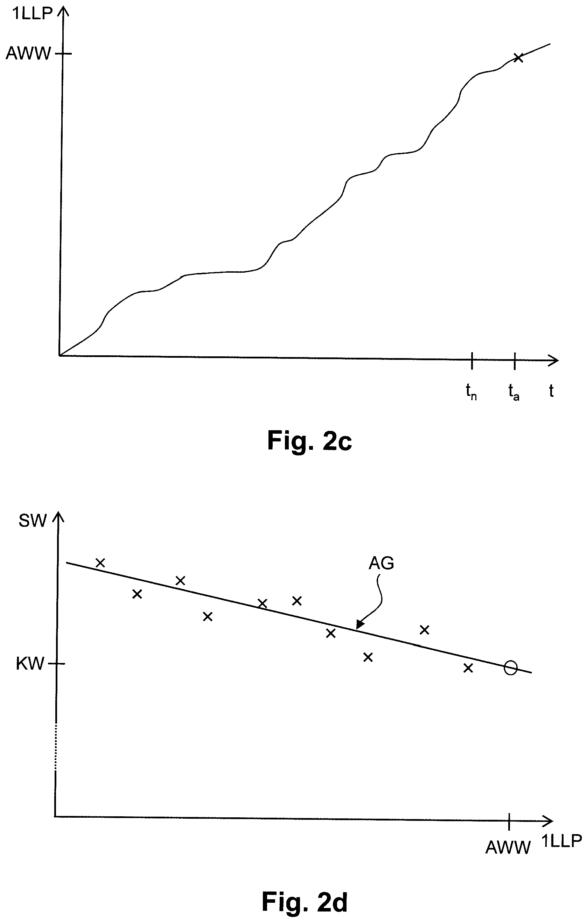

Die **Fig. 2c** zeigt schematisch die Entwicklung des Werts eines ersten Laufleistungsparameters 1LLP über der Zeit t. Insbesondere nimmt der erste Laufleistungsparameter 1LLP zu einem Auswertezeitpunkt tₐ einen Auswertewert **AWW** an.

In der **Fig. 2d** sind Schätzwerte SW für den Raddurchmesser über dem ersten Laufleistungsparameter 1LLP aufgetragen. Die Schätzwerte SW wurden jeweils für einen Messzeitpunkt tᵢ aus den Werten des Drehgeschwindigkeitsparameters DGP und der Referenzgeschwindigkeit VREF berechnet. In der Fig. 2d sind diese Schätzwerte SW über den zugehörigen Werten des ersten Laufleistungsparameters 1LLP aufgetragen. Ferner ist eine Ausgleichsgerade **AG** eingezeichnet, die nach der Methode der kleinsten Fehlerquadrate bestimmt werden kann. Der Ausgleichsgerade AG wird ein Korrekturwert KW entnommen, der sich aus den Schätzwerten SW für den Auswertewert AWW des ersten Laufleistungsparameters 1LLP ergibt.

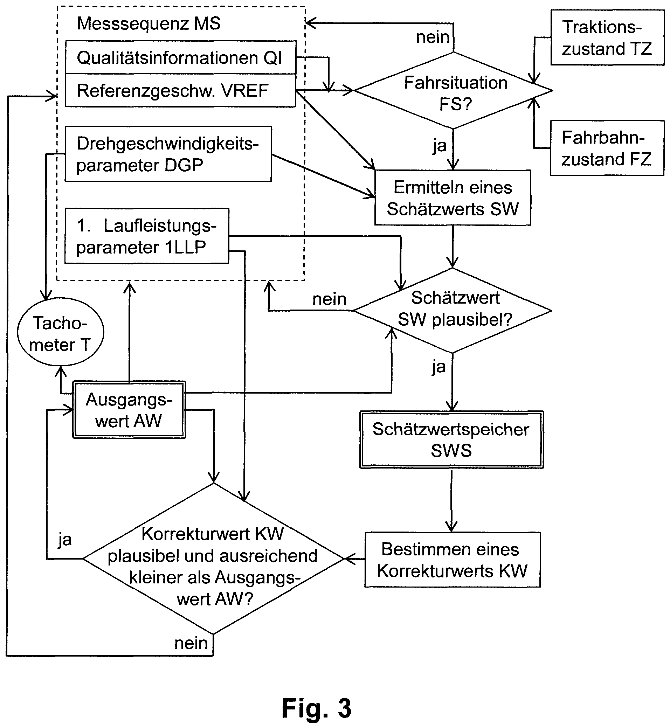

Die **Fig. 3** zeigt einen schematischen Ablaufplan einer zweiten Variante eines erfindungsgemäßen Verfahrens. Das Verfahren umfasst eine Messsequenz **MS**. In der Messsequenz MS werden insbesondere eine Referenzgeschwindigkeit VREF und zugehörige Qualitätsinformationen **QI**, ein Drehgeschwindigkeitsparameter DGP und ein erster Laufleistungsparameter 1LLP gemessen. Anhand der Referenzgeschwindigkeit VREF, der zugehörigen Qualitätsinformationen QI sowie Informationen über einen Traktionszustand **TZ** und einen Fahrbahnzustand **FZ** wird überprüft, ob eine vordefinierte Fahrsituation **FS** vorliegt. Der Traktionszustand TZ beinhaltet insbesondere eine Information darüber, ob das Rad angetrieben oder gebremst wird. Falls die vordefinierte Fahrsituation FS nicht vorliegt, wird eine neue Messsequenz MS ausgelöst. Falls die vordefinierte Fahrsituation FS vorliegt, wird aus der Referenzgeschwindigkeit VREF und dem Drehgeschwindigkeitsparameter DGP ein Schätzwert SW für den Raddurchmesser eines Rades eines Fahrzeugs berechnet. Dieser Schätzwert wird auf Grundlage des gemessenen Werts des ersten Laufleistungsparameters 1LLP und eines hinterlegten Ausgangswerts AW für den Raddurchmesser auf Plausibilität überprüft. Falls der Schätzwert SW nicht plausibel ist, wird eine neue Messsequenz MS ausgelöst. Falls der Schätzwert plausibel ist, wird er in einen Schätzwertspeicher SWS eingetragen (hinzugefügt).

Anhand der in dem Schätzwertspeicher SWS hinterlegten Schätzwerte wird sodann ein Korrekturwert KW für den Raddurchmesser berechnet. Hier wird der Korrekturwert KW nach jedem Neueintragen eines Schätzwerts SW in den Schätzwertspeicher SWS berechnet. Optional kann die Anzahl der Einträge in dem Schätzwertspeicher SWS begrenzt werden, etwa indem ein alter Eintrag gelöscht wird, wenn ein neuer Schätzwert SW eingetragen wird, und sofern bereits eine vorgegebene Anzahl n von Schätzwerten in dem Schätzwertspeicher SWS eingetragen ist (nicht dargestellt). Es können alternativ dazu jedoch auch beliebig viele Schätzwerte SW angesammelt werden. Der Korrekturwert KW wird sodann gegenüber dem Ausgangswert AW auf Plausibilität und eine ausreichende Durchmesserverringerung hin überprüft. Wenn der Korrekturwert KW um eine Mindestabweichung kleiner ist als der Ausgangswert AW und sich entsprechend des Werts des ersten Laufleistungsparameters 1LLP gegenüber dem Ausgangswert AW verringert hat, wird der Zahlenwert des Ausgangswerts AW durch den Zahlenwert des Korrekturwerts KW ersetzt. Sodann wird eine neue Messsequenz MS ausgelöst. Wenn die genannten Bedingungen nicht erfüllt sind, wird eine neue Messsequenz MS ausgelöst, ohne den Zahlenwert des Ausgangswerts AW zu aktualisieren. Zudem kann dann der Schätzwertspeicher SWS und ein evtl. vorhandener Speicher für einen ersten Laufleistungsparameter (nicht dargestellt) gelöscht (geleert) werden.

Der hinterlegte Ausgangswert AW und der Drehgeschwindigkeitsparameter DGP werden hier weiterhin einem Tachometer **T** zugeführt, der aus deren Werten eine aktuelle Tachometergeschwindigkeit berechnet und einen Fahrstreckenzähler aktualisiert.

Zusammenfassend betrifft die Erfindung ein Verfahren zur automatischen Bestimmung eines aktuellen Raddurchmessers eines Rades, dessen Durchmesser sich durch Abnutzung im Fahrbetrieb eines Fahrzeugs stetig verkleinert. Aus einem Drehgeschwindigkeitsparameter des Rades und einer unabhängig davon bestimmten Referenzgeschwindigkeit wird mehrfach ein Schätzwert für den Raddurchmesser berechnet. Wenn der Drehgeschwindigkeitsparameter DGP die Drehfrequenz DF des Rades ist, kann ein Schätzwert SW insbesondere als SW = VREF/(Pi^{∗}DF) aus der Referenzgeschwindigkeit VREF berechnet werden. Aus der Vielzahl von Schätzwerten wird mit statistischen Methoden, insbesondere durch eine Ausgleichsrechnung, ein Korrekturwert für den Raddurchmesser bestimmt. Alle gemessenen und berechneten Größen werden soweit möglich Plausibilitätskontrollen unterzogen, wobei Erfahrungswerte über die Abnutzung des Rades berücksichtigt werden. Dadurch wird vermieden, dass ein fehlerhaft bestimmter Korrekturwert als der aktuelle Raddurchmesser angesetzt wird. Die genauen Merkmale des beanspruchten Verfahrens sind im unabhängigen Anspruch 1 definiert.

### Bezugszeichenliste

- AG: Ausgleichsgerade
- AW: Ausgangswert
- AWW: Auswertewert
- DF: Drehfrequenz
- DGP: Drehgeschwindigkeitsparameter
- EW: Erwartungswert
- FS: Fahrsituation
- FZ: Fahrbahnzustand
- KGW: Kontrollgrenzwert
- KW: Korrekturwert
- MA: Mindestabweichung
- MS: Messsequenz
- PG: Plausibilitätsgrenzwert
- tᵢ: Messzeitpunkt
- tₐ: Auswertezeitpunkt
- QI: Qualitätsinformationen
- SGW: Schätzgrenzwert
- SW: Schätzwert
- SWS: Schätzwertspeicher
- S1L: Speicher für ersten Laufleistungsparameter
- S2L: Speicher für zweiten Laufleistungsparameter
- S3L: Speicher für dritten Laufleistungsparameter
- t: Zeit
- T: Tachometer
- TZ: Traktionszustand
- VK: Kontrollgeschwindigkeit
- VREF: Referenzgeschwindigkeit
- Z: Zähler
- ZEW: Zwischenerwartungswert
- ZKW1: erster Korrekturzwischenwert
- ZKW2: zweiter Korrekturzwischenwert
- ZKW3: dritter Korrekturzwischenwert
- 1LLP: erster Laufleistungsparameter
- 2LLP: zweiter Laufleistungsparameter
- 3LLP: dritter Laufleistungsparameter

## Patentansprüche

1. Verfahren zum Ermitteln eines aktuellen Raddurchmessers eines Rades eines Fahrzeugs, insbesondere eines Schienenfahrzeugs, umfassend die Schritte:
a) Hinterlegen eines Ausgangswerts (AW) des Raddurchmessers,
b) Messen eines Drehgeschwindigkeitsparameters (DGP) des Rades für einen Messzeitpunkt (tᵢ) (i = 1 ... n),
c) Bestimmen einer von dem Drehgeschwindigkeitsparameter (DGP) unabhängigen Referenzgeschwindigkeit (VREF) zum Messzeitpunkt (tᵢ),
d) Ermitteln eines Schätzwerts (SW) eines Raddurchmesserparameters für den Messzeitpunkt (tᵢ) ausgehend von der in Schritt c) bestimmten Referenzgeschwindigkeit (VREF) und dem in Schritt b) gemessenen Wert des Drehgeschwindigkeitsparameters (DGP) des Rades,
e) Wiederholen der Schritte b) bis d) für verschiedene Messzeitpunkte (tᵢ),
f) Bestimmen eines Korrekturwerts (KW) des Raddurchmessers für einen Auswertezeitpunkt (tₐ) aus den ermittelten Schätzwerten (SW),
wobei ein Erwartungswert (EW) des Raddurchmessers für den Auswertezeitpunkt (tₐ) ausgehend von dem Ausgangswert (AW) des Raddurchmessers und einem Wert eines ersten Laufleistungsparameters (1LLP) des Fahrzeugs ermittelt wird; und
die betragsmäßige Differenz von Korrekturwert (KW) und Erwartungswert (EW) mit einem Plausibilitätsgrenzwert (PG) verglichen wird und der Korrekturwert (KW) mit dem Ausgangswert (AW) des Raddurchmessers verglichen wird; und
der Zahlenwert des Ausgangswerts (AW) durch den Zahlenwert des Korrekturwerts (KW) nur dann ersetzt wird,
sofern der Vergleich der betragsmäßigen Differenz von Korrekturwert (KW) und Erwartungswert (EW) mit dem Plausibilitätsgrenzwert (PG) ergibt, dass die betragsmäßige Differenz von Korrekturwert (KW) und Erwartungswert (EW) unter dem Plausibilitätsgrenzwert (PG) liegt und sofern der Vergleich des Korrekturwerts (KW) mit dem Ausgangswert (AW) des Raddurchmessers ergibt, dass der Korrekturwert (KW) wenigstens um eine Mindestabweichung (MA) kleiner ist als der Ausgangswert (AW).

2. Verfahren nach Anspruch 1, **dadurch gekennzeichnet, dass** den in Schritt d) ermittelten Schätzwerten (SW) jeweils ein Wert des ersten Laufleistungsparameters (1LLP) zugeordnet wird, und
dass in Schritt f) der Korrekturwert (KW) des Raddurchmessers durch eine Ausgleichsrechnung aus den Schätzwerten (SW) und den zugeordneten Werten des ersten Laufleistungsparameters (1LLP) bestimmt wird.

3. Verfahren nach Anspruch 1, **dadurch gekennzeichnet, dass** den in Schritt d) ermittelten Schätzwerten (SW) jeweils ein Wert von mindestens zwei Laufleistungsparametern (1LLP, 2LLP, 3LLP) zugeordnet wird,
dass in Schritt f) zunächst für jeden Laufleistungsparameter (1LLP, 2LLP, 3LLP) ein Korrekturzwischenwert (ZKW1, ZKW2, ZKW3) des Raddurchmessers durch eine Ausgleichsrechnung aus den Schätzwerten (SW) und den zugeordneten Werten des jeweiligen Laufleistungsparameters (1LLP, 2LLP, 3LLP) bestimmt wird, und
dass der Korrekturwert (KW) aus den Korrekturzwischenwerten (ZKW1, ZKW2, ZKW3) bestimmt wird, bevorzugt wobei der größte Korrekturzwischenwert (ZKW1, ZKW2, ZKW3) als der Korrekturwert (KW) verwendet wird.

4. Verfahren nach einem der vorhergehenden Ansprüche, **dadurch gekennzeichnet, dass** für jede in Schritt c) bestimmte Referenzgeschwindigkeit (VREF) eine Plausibilitätskontrolle hinsichtlich des Ausgangswertes (AW) des Raddurchmessers und des jeweiligen Werts des Drehgeschwindigkeitsparameters (DGP) des Rades durchgeführt wird.

5. Verfahren nach einem der vorhergehenden Ansprüche, **dadurch gekennzeichnet, dass** Schritt b) durchgeführt wird, während sich das Fahrzeug in einer vordefinierten Fahrsituation (FS) befindet.

6. Verfahren nach Anspruch 5, **dadurch gekennzeichnet, dass** die vordefinierte Fahrsituation (FS) herbeigeführt wird, um Schritt b) durchzuführen.

7. Verfahren nach Anspruch 5 oder 6, **dadurch gekennzeichnet, dass** die vordefinierte Fahrsituation (FS) umfasst, dass sich das Fahrzeug in einem traktionslosen Zustand befindet.

8. Verfahren nach Anspruch 6 oder 7, **dadurch gekennzeichnet, dass** in einem Fahrtenplan für das Fahrzeug vorbestimmt ist, wann und/oder wo die Fahrsituation (FS) herbeigeführt wird.

9. Verfahren nach einem der vorhergehenden Ansprüche, **dadurch gekennzeichnet, dass** die Referenzgeschwindigkeit (VREF) unabhängig von Ortsdaten des Fahrzeugs bestimmt wird.

10. Verfahren nach einem der vorhergehenden Ansprüche, **dadurch gekennzeichnet, dass** bei der Bestimmung der Referenzgeschwindigkeit (VREF) in Schritt c) ein Laufzeitunterschied zweier Messsignale berücksichtigt wird, bevorzugt wobei die Messsignale von dem Fahrzeug ausgesandt werden.

11. Verfahren nach einem der vorhergehenden Ansprüche, **dadurch gekennzeichnet, dass** bei der Bestimmung der Referenzgeschwindigkeit (VREF) in Schritt c) der Dopplereffekt ausgenutzt wird.

12. Verfahren nach Anspruch 11, **dadurch gekennzeichnet, dass** die Referenzgeschwindigkeit (VREF) mittels eines an dem Fahrzeug angeordneten GPS-Empfängers bestimmt wird, und dass von dem GPS-Empfänger Qualitätsinformationen (QI) über die Güte der Referenzgeschwindigkeit (VREF) bereitgestellt werden.

13. Verfahren nach einem der vorhergehenden Ansprüche, **dadurch gekennzeichnet, dass** für den jeweiligen Messzeitpunkt (tᵢ) eine Kontrollgeschwindigkeit (VK) bestimmt wird, bevorzugt wobei die Kontrollgeschwindigkeit (VK) mit einer von dem Fahrzeug zurückgelegten Fahrstrecke und der dazu benötigten Zeit bestimmt wird, dass überprüft wird, ob eine Abweichung, bevorzugt eine betragsmäßige Abweichung, der Referenzgeschwindigkeit (VREF) von der Kontrollgeschwindigkeit (VK) einen Kontrollgrenzwert (KGW) nicht überschreitet, und dass falls die Abweichung den Kontrollgrenzwert (KGW) nicht überschreitet in Schritt d) der Schätzwert (SW) aus der Referenzgeschwindigkeit (VREF) und dem Drehgeschwindigkeitsparameter (DGP) berechnet wird, und andernfalls die Messung der Referenzgeschwindigkeit (VREF), des Drehgeschwindigkeitsparameters (DGP) und der Kontrollgeschwindigkeit (VK) wiederholt wird.

14. Verfahren nach einem der vorhergehenden Ansprüche, **dadurch gekennzeichnet, dass** für jeden in Schritt d) ermittelten Schätzwert (SW) eine Plausibilitätskontrolle hinsichtlich des Ausgangswerts (AW) des Raddurchmessers und/oder der zu vorherigen Messzeitpunkten (tᵢ) bestimmten Schätzwerte (SW) durchgeführt wird.

15. Verfahren nach einem der vorhergehenden Ansprüche, **dadurch gekennzeichnet, dass** für jeden in Schritt d) ermittelten Schätzwert (SW) ausgehend von dem Ausgangswert (AW) des Raddurchmessers und dem Wert des ersten Laufleistungsparameters (1LLP) des Fahrzeugs zum Messzeitpunkt (tᵢ) ein Zwischenerwartungswert (ZEW) des Raddurchmesserparameters ermittelt wird, und
dass der Schätzwert (SW) mit dem Zwischenerwartungswert (ZEW) des Raddurchmesserparameters verglichen wird und der Schätzwert (SW) verworfen wird, sofern die betragsmäßige Differenz von Schätzwert (SW) und Zwischenerwartungswert (ZEW) über einem Schätzgrenzwert (SGW) liegt.

16. Verfahren nach einem der vorhergehenden Ansprüche, **dadurch gekennzeichnet, dass** ein Montagewert (MW) für den Raddurchmesser hinterlegt ist und dass für den Fall dass der Korrekturwert (KW) wenigstens um eine Mindestabweichung (MA') größer ist als der Ausgangswert (AW) und die betragsmäßige Differenz von Korrekturwert (KW) und Montagewert (MW) unter einem Montagegrenzwert (MG) liegt, der Zahlenwerts des Ausgangswerts (AW) durch den Maximalwert (MW) ersetzt wird oder ein Hinweissignal erzeugt wird.

## Claims

1. Method for determining a current wheel diameter of a wheel of a vehicle, in particular of a rail vehicle, comprising the steps of:
a) storing an initial value (AW) of the wheel diameter,
b) measuring a rotational speed parameter (DGP) of the wheel for a measuring time (tᵢ) (i = 1... n),
c) determining a reference speed (VREF) independent of the rotational speed parameter (DGP) at the measuring time (tᵢ),
d) determining an estimated value (SW) of a wheel diameter parameter for the measuring time (tᵢ) on the basis of the reference speed (VREF) determined in step c) and the value of the rotational speed parameter (DGP) of the wheel measured in step b),
e) repeating steps b) to d) for different measuring times (tᵢ),
f) determining a correction value (KW) of the wheel diameter for an evaluation time (tₐ) from the estimated values (SW),
wherein
an expected value (EW) of the wheel diameter for the evaluation time (tₐ) is determined on the basis of the initial value (AW) of the wheel diameter and a value of a first mileage parameter (1LLP) of the vehicle; and
the difference in amount between the correction value (KW) and the expected value (EW) is compared with a plausibility limit value (PG), and the correction value (KW) is compared with the initial value (AW) of the wheel diameter; and
the numerical value of the initial value (AW) is only replaced by the numerical value of the correction value (KW), if the comparison of the difference in amount between the correction value (KW) and the expected value (EW) with the plausibility limit value (PG) shows that the difference in amount between the correction value (KW) and the expected value (EW) is below the plausibility limit value (PG), and if the comparison of the correction value (KW) with the initial value (AW) of the wheel diameter shows that the correction value (KW) is at least a minimum deviation (MA) smaller than the initial value (AW).

2. Method according to claim 1, **characterized in that** the estimated values (SW) determined in step d) are each assigned a value of the first mileage parameter (1LLP), and
that, in step f), the correction value (KW) of the wheel diameter is determined by a compensation calculation from the estimated values (SW) and the assigned values of the first mileage parameter (1LLP).

3. Method according to claim 1, **characterized in that** the estimated values (SW) determined in step d) are each assigned a value of at least two mileage parameters (1LLP, 2LLP, 3LLP),
that, in step f), for each mileage parameter (1LLP, 2LLP, 3LLP), an intermediate correction value (ZKW1, ZKW2, ZKW3) of the wheel diameter is determined by means of a compensation calculation from the estimated values (SW) and the assigned values of the respective mileage parameter (1LLP, 2LLP, 3LLP), and
that the correction value (KW) is determined from the intermediate correction values (ZKW1, ZKW2, ZKW3), preferably with the largest intermediate correction value (ZKW1, ZKW2, ZKW3) being used as the correction value (KW).

4. Method according to one of the preceding claims, **characterized in that**, for each reference speed (VREF) determined in step c), a plausibility check is carried out with regard to the initial value (AW) of the wheel diameter and the respective value of the rotational speed parameter (DGP) of the wheel.

5. Method according to one of the preceding claims, **characterized in that** step b) is carried out while the vehicle is in a predefined driving situation (FS).

6. Method according to claim 5, **characterized in that** the predefined driving situation (FS) is brought about in order to carry out step b).

7. Method according to claim 5 or 6, **characterized in that** the predefined driving situation (FS) comprises that the vehicle is in a tractionless state.

8. Method according to claim 6 or 7, **characterized in that** it is predetermined in a timetable for the vehicle when and/or where the driving situation (FS) is brought about.

9. Method according to one of the preceding claims, **characterized in that** the reference speed (VREF) is determined independently of location data of the vehicle.

10. Method according to one of the preceding claims, **characterized in that** when determining the reference speed (VREF) in step c), a difference in the transit time of two measurement signals is taken into account, preferably with the measurement signals being emitted by the vehicle.

11. Method according to one of the preceding claims, **characterized in that** the Doppler effect is used in the determination of the reference speed (VREF) in step c).

12. Method according to claim 11, **characterized in that** the reference speed (VREF) is determined by means of a GPS receiver arranged on the vehicle, and that the GPS receiver provides quality information (QI) about the quality of the reference speed (VREF),

13. Method according to one of the preceding claims, **characterized in that** a control speed (VK) is determined for the respective measuring time (tᵢ), preferably wherein the control speed (VK) is determined with a distance traveled by the vehicle and the time required for this, that it is checked whether a deviation, preferably a deviation in amount, of the reference speed (VREF) from the control speed (VK) does not exceed a control limit value (KGW) and that, if the deviation does not exceed the control limit value (KGW) in step d), the estimated value (SW) is calculated from the reference speed (VREF) and the rotational speed parameter (DGP), and, otherwise, the measurement of the reference speed (VREF), the rotational speed parameter (DGP), and the control speed (VK) is repeated.

14. Method according to one of the preceding claims, **characterized in that**, for each estimated value (SW) determined in step d), a plausibility check is carried out with regard to the initial value (AW) of the wheel diameter and/or the estimated values (SW) determined at previous measuring times (tᵢ).

15. Method according to one of the preceding claims, **characterized in that**, for each estimated value (SW) determined in step d) based on the initial value (AW) of the wheel diameter and the value of the first mileage parameter (1LLP) of the vehicle at the measuring time (tᵢ), an intermediate expected value (ZEW) of the wheel diameter parameter is determined, and
that the estimated value (SW) is compared with the intermediate expected value (ZEW) of the wheel diameter parameter, and the estimated value (SW) is rejected if the difference in amount between the estimated value (SW) and the intermediate expected value (ZEW) is above an estimated limit value (SGW).

16. Method according to one of the preceding claims, **characterized in that** an installation value (MW) for the wheel diameter is stored and that, in the event that the correction value (KW) is at least a minimum deviation (MA') greater than the initial value (AW) and the difference in amount of the correction value (KW) and the installation value (MW) is below an installation limit value (MG), the numerical value of the initial value (AW) is replaced by the maximum value (MW), or an information signal is generated.

## Revendications

1. Procédé de spécification d'un diamètre effectif d'une roue d'un véhicule, en particulier d'un véhicule ferroviaire, incluant les étapes consistant à :
a) mémoriser une valeur initiale (AW) du diamètre de la roue,
b) mesurer un paramètre (DGP) de vitesse de rotation de ladite roue pour un instant de mesure (tᵢ) (i = 1...n),
c) déterminer, audit instant de mesure (tᵢ), une vitesse de référence (VREF) indépendante dudit paramètre (DGP) de vitesse de rotation,
d) spécifier une valeur estimative (SW) d'un paramètre de diamètre de la roue pour ledit instant de mesure (tᵢ), sur la base de ladite vitesse de référence (VREF) déterminée à l'étape c) et de la valeur dudit paramètre (DGP) de vitesse de rotation de ladite roue, mesurée à l'étape b),
e) réitérer les étapes b) à d) pour différents instants de mesure (tᵢ),
f) déterminer, à partir des valeurs estimatives (SW) spécifiées, une valeur correctrice (KW) du diamètre de la roue pour un instant d'évaluation (tₐ), sachant
qu'une valeur escomptée (EW) dudit diamètre de la roue, pour ledit instant d'évaluation (tₐ), est spécifiée sur la base de ladite valeur initiale (AW) du diamètre de ladite roue, et d'une valeur d'un premier paramètre (1LLP) de performance kilométrique du véhicule ;
que la différence numérique, entre la valeur correctrice (KW) et ladite valeur escomptée (EW), est comparée à une valeur limite de vraisemblance (PG), et ladite valeur correctrice (KW) est comparée à ladite valeur initiale (AW) dudit diamètre de la roue ; et
que la grandeur chiffrée de ladite valeur initiale (AW) n'est remplacée, par la grandeur chiffrée de ladite valeur correctrice (KW), que dans la mesure où la comparaison de la différence numérique entre la valeur correctrice (KW) et la valeur escomptée (EW), avec ladite valeur limite de vraisemblance (PG), implique que ladite différence numérique, entre ladite valeur correctrice (KW) et ladite valeur escomptée (EW), se situe en deçà de ladite valeur limite de vraisemblance (PG), et dans la mesure où la comparaison de ladite valeur correctrice (KW), avec la valeur initiale (AW) du diamètre de la roue, implique que ladite valeur correctrice (KW) est inférieure, d'au moins un écart minimal (MA), à ladite valeur initiale (AW).

2. Procédé selon la revendication 1, **caractérisé par le fait qu'**une valeur du premier paramètre (1LLP) de performance kilométrique est attribuée, à chaque fois, aux valeurs estimatives (SW) spécifiées à l'étape d) ; et
**par le fait que** la valeur correctrice (KW) du diamètre de la roue est déterminée, à l'étape f), par un calcul de compensation fondé sur lesdites valeurs estimatives (SW) et sur les valeurs attribuées dudit premier paramètre (1LLP) de performance kilométrique.

3. Procédé selon la revendication 1, **caractérisé par le fait qu'**une valeur d'au moins deux paramètres (1LLP, 2LLP, 3LLP) de performance kilométrique est attribuée, à chaque fois, aux valeurs estimatives (SW) spécifiées à l'étape d) ;
**par le fait qu'**une valeur correctrice intermédiaire (ZKW1, ZKW2, ZKW3) du diamètre de la roue est déterminée à l'étape f), dans un premier temps pour chaque paramètre (1LLP, 2LLP, 3LLP) de performance kilométrique, par un calcul de compensation fondé sur lesdites valeurs estimatives (SW) et sur les valeurs attribuées du paramètre considéré (1LLP, 2LLP, 3LLP) de performance kilométrique ; et
**par le fait que** la valeur correctrice (KW) est déterminée sur la base des valeurs correctrices intermédiaires (ZKW1, ZKW2, ZKW3), la valeur correctrice intermédiaire (ZKW1, ZKW2, ZKW3) maximale étant utilisée en tant que valeur correctrice (KW).

4. Procédé selon l'une des revendications précédentes, **caractérisé par le fait qu'**un contrôle de vraisemblance, se rapportant à la valeur initiale (AW) du diamètre de la roue et à la valeur considérée du paramètre (DGP) de vitesse de rotation de ladite roue, est effectué pour chaque vitesse de référence (VREF) déterminée à l'étape c).

5. Procédé selon l'une des revendications précédentes, **caractérisé par le fait que** l'étape b) est exécutée alors que le véhicule se trouve dans une situation de conduite (FS) prédéfinie.

6. Procédé selon la revendication 5, **caractérisé par le fait que** la situation de conduite (FS) prédéfinie est provoquée pour exécuter l'étape b).

7. Procédé selon la revendication 5 ou 6, **caractérisé par le fait que** la situation de conduite (FS) prédéfinie inclut le cas dans lequel le véhicule se trouve dans un état exempt de traction.

8. Procédé selon la revendication 6 ou 7, **caractérisé par le fait que** le moment et/ou le lieu, au(x)quel(s) la situation de conduite (FS) est provoquée, est (sont) prédéterminé(s) dans un plan de déplacement dévolu au véhicule.

9. Procédé selon l'une des revendications précédentes, **caractérisé par le fait que** la vitesse de référence (VREF) est déterminée indépendamment de données de localisation du véhicule.

10. Procédé selon l'une des revendications précédentes, **caractérisé par le fait qu'**une différence de durée de propagation de deux signaux de mesure est prise en compte lors de la détermination de la vitesse de référence (VREF), à l'étape c), lesdits signaux de mesure étant de préférence émis par le véhicule.

11. Procédé selon l'une des revendications précédentes, **caractérisé par le fait que** l'effet Doppler est utilisé lors de la détermination de la vitesse de référence (VREF), à l'étape c).

12. Procédé selon la revendication 11, **caractérisé par le fait que** la vitesse de référence (VREF) est déterminée au moyen d'un récepteur GPS implanté sur le véhicule ; et **par le fait que** des informations qualitatives (QI), relatives à la qualité de ladite vitesse de référence (VREF), sont fournies par ledit récepteur GPS.

13. Procédé selon l'une des revendications précédentes, **caractérisé par le fait qu'**une vitesse de contrôle (VK) est déterminée pour l'instant de mesure (tᵢ) considéré, ladite vitesse de contrôle (VK) étant déterminée, de préférence, à l'appui d'un trajet de déplacement parcouru par le véhicule et du temps nécessaire à cette fin ; **par le fait qu'**il est vérifié si un écart, de préférence un écart numérique de la vitesse de référence (VREF) vis-à-vis de ladite vitesse de contrôle (VK), n'excède pas une valeur limite de contrôle (KGW) ; et **par le fait que**, dans le cas où ledit écart n'excède pas ladite valeur limite de contrôle (KGW), la valeur estimative (SW) est calculée, à l'étape d), à partir de ladite vitesse de référence (VREF) et du paramètre (DGP) de vitesse de rotation, faute de quoi la mesure de ladite vitesse de référence (VREF), dudit paramètre (DGP) de vitesse de rotation et de ladite vitesse de contrôle (VK) est réitérée.

14. Procédé selon l'une des revendications précédentes, **caractérisé par le fait qu'**un contrôle de vraisemblance, se rapportant à la valeur initiale (AW) du diamètre de la roue et/ou aux valeurs estimatives (SW) déterminées à des instants de mesure (tᵢ) précédents, est effectué pour chaque valeur estimative (SW) spécifiée à l'étape d).

15. Procédé selon l'une des revendications précédentes, **caractérisé par le fait qu'**une valeur escomptée intermédiaire (ZEW) du paramètre de diamètre de la roue est spécifiée, pour chaque valeur estimative (SW) spécifiée à l'étape d), sur la base de la valeur initiale (AW) dudit diamètre de la roue et de la valeur du premier paramètre (1LLP) de performance kilométrique du véhicule, à l'instant de mesure (tᵢ) ; et
**par le fait que** la valeur estimative (SW) est comparée à ladite valeur escomptée intermédiaire (ZEW) du paramètre de diamètre de la roue, et ladite valeur estimative (SW) est rejetée dans la mesure où la différence numérique, entre ladite valeur estimative (SW) et ladite valeur escomptée intermédiaire (ZEW), se situe au-delà d'une valeur limite estimative (SGW).

16. Procédé selon l'une des revendications précédentes, **caractérisé par** la mémorisation d'une valeur de montage (MW) affectée au diamètre de la roue ; et par le fait que, dans le cas où la valeur correctrice (KW) est supérieure, d'au moins un écart minimal (MA'), à la valeur initiale (AW) et où la différence numérique, entre ladite valeur correctrice (KW) et ladite valeur de montage (MW), se situe en deçà d'une valeur limite de montage (MG), la grandeur chiffrée de ladite valeur initiale (AW) est remplacée par la valeur maximale (MW), ou bien un signal d'avertissement est engendré.
